(19) Europäisches Patentamt
European Patent Office
Office européen des brevets

(11) **EP 3 833 956 B1**

(12) **EUROPEAN PATENT SPECIFICATION**

(45) Date of publication and mention
of the grant of the patent:
**19.02.2025 Bulletin 2025/08**

(21) Application number: **19753464.7**

(22) Date of filing: **09.08.2019**

(51) International Patent Classification (IPC):
*G01N 1/22* *(2006.01)*    *G01F 1/64* *(2006.01)*
*G01F 1/704* *(2006.01)*    *G01F 1/74* *(2006.01)*
*G01N 15/06* *(2024.01)*    *G01P 5/08* *(2006.01)*

(52) Cooperative Patent Classification (CPC):
**G01N 1/2247; G01F 1/64; G01F 1/7048;
G01F 1/7088; G01F 1/74; G01N 1/2252;
G01N 1/2258; G01N 15/0656; G01P 5/08;
G01F 1/7046**

(86) International application number:
**PCT/GB2019/052256**

(87) International publication number:
**WO 2020/030934 (13.02.2020 Gazette 2020/07)**

(54) **A PARTICLE CONCENTRATION SENSOR**

TEILCHENKONZENTRATIONSSENSOR

CAPTEUR DE CONCENTRATION DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2018 GB 201813102**

(43) Date of publication of application:
**16.06.2021 Bulletin 2021/24**

(73) Proprietor: **Envea UK Ltd
Cambridge, Cambridgeshire CB24 4RB (GB)**

(72) Inventors:
• **RIGBY, Michael
St Ives, Cambridgeshire PE27 3GH (GB)**
• **GRAMMATIKAKIS, Vasileios
St Ives, Cambridgeshire PE27 3GH (GB)**
• **UNITT, David
St Ives, Cambridgeshire PE27 3GH (GB)**
• **BAKER, Colin
St Ives, Cambridgeshire PE27 3GH (GB)**

(74) Representative: **Abel & Imray LLP
Westpoint Building
James Street West
Bath BA1 2DA (GB)**

(56) References cited:
WO-A1-93/22653    WO-A1-94/23281
WO-A2-2014/106078    CN-A- 104 316 720
FR-A1- 2 215 608    GB-A- 1 485 750
GB-A- 2 327 761    US-A- 4 607 228

**Description**

Field of the Invention

The present invention relates to the field of particle concentration sensors. More particularly, but not exclusively, this invention concerns measurement of the concentration of solid particles in a fluid flow.

Background of the Invention

Measurement of solid particle concentration and velocity in a fluid flow is an important requirement in a number of industries and sectors (for example environmental monitoring, power production, food processing and manufacturing, and pharmaceutical and medicine development).

In an established method for measuring particle concentration in a flow, a conductive probe projects into the flow and, as solid particles moving within the flow interact with the probe, an electric charge accumulates on the probe. This charge flows as an electric current from the probe providing a signal which may be processed to extract a measure of the rate and mass of particle flow past the probe. The electrical signal produced is considered to be a direct measurement of particle concentration in the flow.

It is known in the art that the DC component of such an induced signal may be evaluated to determine the solid particle concentration in a fluid flow. For example, WO 86/02454 describes apparatus for measuring flow velocity and mass flow rate of particles in a gas flow. A metal probe placed in a gas flow containing solid particles is coupled to an electric circuit containing processing means. The probe is charged by the particles interacting with the probe. The resulting current provides a signal which is subsequently low-pass filtered to remove any AC signal components of a frequency greater than 0.3Hz. The remaining signal consists essentially of just the DC component of the signal. This DC component is then evaluated by the processing means to produce an output signal corresponding to the flow rate of the particles. However, the method fails to accurately measure solid particle concentration in the presence of variable flow velocity. This reduces measurement reliability and can even render the methods ineffective in applications with rapid and wide variation in flow velocity. Many prior art particle concentration sensors place strict bounds on their operational flow velocities.

WO9905479A1 describes a method in which cross correlation is used to measure flow velocity. Two triboelectric probes are disposed in a fluid flow and the signals obtained from the two probes are correlated, by means of a large series of mathematical calculations, to obtain a measure of the velocity of the fluid flow. However, this method requires the use of a second triboelectric probe and severely complicates the signal processing, resulting in increased system cost and complexity.

US Patent 5,644,241 describes a method which attempts to provide accurate measurement of particle concentration in the presence of variable flow velocity without the need for an additional probe. A triboelectric probe is disposed in a fluid stream to generate an electrical signal. A first electronic circuit conditions the electrical signal and provides an output proportional to the concentration of solid particles in the flow. A second electronic circuit provides an output proportional to the rate of change of the probe signal. Obtaining a measure of the rate of change of the probe signal allows flow velocity variations in the flow to be compensated for mathematically. However, the mathematical compensation process requires complex calibration procedures and is computationally intensive.

US Patent 5,054,325 describes a second method which attempts to provide accurate measurement of particle concentration in the presence of variable flow velocity without the need for an additional probe. A triboelectric probe is embedded in the wall of a conduit through which a fluid containing suspended solid particles flows. The output signal from the probe is processed by an electronic circuit with very high bandwidth and fast response time, such that it is possible to distinguish individual interactions of solid particles with the probe. By counting particle interactions, it is possible to determine rate of flow past the probe. However, this method requires the use of ultra-wide band electronic circuitry that is complex, prone to electro-magnetic compatibility (EMC) issues, and expensive.

WO9322653A1, describes a method of determining the concentration of particles in a flow. An electrically conducting rod is mounted in a stack and is coupled to a processing circuit. The rod is charged triboelectrically by the particles in the gas flow and the signal generated in the circuit is evaluated to give an output providing an indication of the particle flow. The rod is insulated at the point where it is mounted in the stack wall to prevent currents being transmitted to and from the stack wall, but the insulating material does not extend over the whole outer surface of the conducting rod. The alternating current (AC) component of the signal is evaluated in a frequency band between 0.1Hz and 2Hz. Variations in gas flow related variables other than those relating to particle flow are liable to affect the direct current (DC) value of a signal from a triboelectric probe, but do not affect the magnitude of the AC component of the signal to the same extent. The term "gas flow related variables" refers to variables that are related to the environment in the region of the gas flow and at the probe, to the gas flow itself and/or to the particles in the gas flow. Examples of gas flow related variables other than those relating to particle flow are therefore: humidity in the region of the gas flow, temperature of the gas flow, thickness of a particulate layer deposited on the probe, and the electrical charge of particles in the gas flow. Examples of gas flow related variables that relate to particle flow are the mass flow rate of the particles, and the velocity and size of the particles. Thus, although it might at first appear disadvantageous to evaluate the much smaller amplitude AC signal component rather than the larger DC component, the reduced signal magnitude is more than compensated for by the much improved correlation between the mass flow rate of particles in the flow and the AC signal component. However, the AC signal component is significantly affected by particle velocity, therefore this method still cannot provide accurate measurement of particle concentration in the presence of variable flow velocity.

WO9423281A1, describes an alternative method of determining the concentration of particles in a flow. A probe is positioned to project into the flow of particles so as to be charged triboelectrically by the particles in the flow. In this case, the part of the probe which projects into the particle flow comprises an electrically conducting core with an insulating layer which insulates the core from the particle flow. The AC component of the signal from the probe is evaluated in a frequency band between 0.1Hz and 5Hz. Again the AC component of the signal is small when compared to the DC component, it has been found that the AC component of the signal gives a more accurate reflection of the particle flow than the DC component of the signal. Again, the AC signal component is significantly affected by particle velocity, therefore this method still cannot provide accurate measurement of particle concentration in the presence of variable flow velocity.

WO 2014/106078 A2 describes probes for monitoring electrostatic phenomena in challenging environments, such as fluidized bed reactors. These probes include a coated or uncoated static probe for measuring electric field and or particle charge state, an oscillatory electric field probe for measuring electric field, a chopped electric field probe for measuring electric field, and a radiofrequency antenna probe for detecting electrostatic discharges.

GB 1485750 A describes a method of obtaining an indication of particle size or mean particle size of the particles in a turbulently flowing fluid stream containing particles, comprising obtaining by means of a transducer an electrical signal representative of instantaneous particle density at a predetermined station of the stream, and processing the signal to obtain a signal representative of the cut off frequency of the particle velocity fluctuations, which is representative of particle size or mean particle size, thereby to obtain an indication of particle size or mean particle size.

CN 104316720 A describes a charging sensing online dust detecting device for self-adaption flow velocity change and a method thereof. The charging sensing online dust detecting device comprises a signal measuring module and a calculating module; the signal measuring module comprises a plurality of metal probes, a DC (Direct Current) signal measuring circuit and an AC (Alternating Current) signal measuring circuit, wherein the DC signal measuring circuit and the AC signal measuring circuit are connected with the metal probes, and the signal measuring module is used for collecting DC signals and AC signals when the dust collected is flowing, and transmitting the DC signals and the AC signals to the calculating module; the calculating module is used for selecting the DC signals and AC signals, and performing alternating correlation operation on multi-path AC signals, and then compensating the signals in accordance with selecting results and the results of the alternating correlation operation, and finally outputting the signals after calibration.

The present invention seeks to mitigate the above-mentioned problems. Alternatively or additionally, the present invention seeks to provide an improved, more accurate or more cost-effective method and apparatus for measuring the particle concentration in a flow and the velocity of the flow.

Summary of the Invention

The present invention provides, according to a first aspect of the invention, a method of measuring particle concentration in a fluid flow comprising the steps of:

disposing a probe into the flow, such that the probe is charged by particles in the flow;
measuring an electric signal induced by the charging of the probe;
determining the magnitude of an AC component of the signal;
determining the flow velocity, wherein determining the flow velocity comprises determining an average frequency of the AC component of the signal; and
calculating, from the magnitude of the AC component and the flow velocity, the particle concentration in the flow.

As described above, particle concentration sensors of the prior art may evaluate the AC component of an induced signal in order to determine a measure of the particle concentration. As the magnitude of the AC component of the signal appears to be less affected by gas flow related variables such as humidity in the region of the gas flow, temperature of the gas flow, thickness of a particulate layer deposited on the probe, and the electrical charge of particles in the gas flow, this offers an improved measurement of particle concentration compared to evaluation of the DC signal component. However, prior art particle concentration sensors that measure the AC signal component are still significantly affected by variations in particle velocity. The inventors of the present invention have discovered that the AC component of the induced signal is far wider in bandwidth than the 2Hz to 5Hz evaluated by the prior art sensors, and that the narrow filtering of the AC component by prior art sensors prevents accurate measurement of the particle concentration in the presence of variable flow velocity.

Embodiments of the present invention therefore provide a means of accurately measuring the concentration of solid particles in a variable rate fluid flow by evaluating the AC component of the signal across its full bandwidth. The inventors have further discovered that the bandwidth of the AC signal component varies with flow velocity from 5Hz up to 50Hz and that the average frequency of the AC signal component varies approximately linearly with velocity. Therefore embodiments of the present invention can be used to measure the velocity of the particles in the flow by evaluating the average frequency of the wide band AC component of the signal.

According to a second aspect, there is also provided a particle concentration sensor for measuring particle concentration in a fluid flow, comprising:

a probe, arranged to project into the flow;
signal processing electronics, arranged to receive a signal from the probe;
wherein:
the signal processing electronics are arranged to determine the magnitude of an AC component of the signal; determine the flow velocity by determining an average frequency of the AC component of the signal; and calculate, from the magnitude of the AC component and the flow velocity, the particle concentration in the flow.

According to a third aspect of the invention there is provided a stack including a particle concentration sensor according to the second aspect of the invention.

It will of course be appreciated that features described in relation to one aspect of the present invention may be incorporated into other aspects of the present invention. For example, the method of the invention may incorporate any of the features described with reference to the apparatus of the invention and *vice versa.*

Description of the Drawings

Embodiments of the present invention will now be described by way of example only with reference to the accompanying schematic drawings of which:

Figure 1    is a schematic view of a section through a particle concentration sensor according to a first embodiment of the invention;
Figure 2    is a block diagram of particle concentration sensor in accordance with the first embodiment of the invention;
Figure 3    is a block diagram of the signal processing software of Fig. 2;
Figure 4    shows the steps of a method of measuring particle concentration in a flow according to the first embodiment of the invention; and
Figure 5    shows the variation in frequency content of an induced signal at a fixed mass flow rate at 3 different velocities.

Detailed Description

The present invention provides, according to the first aspect, a particle concentration sensor for measuring particle concentration in a fluid flow. The particle concentration sensor comprises a probe, which is arranged so as to project into the flow, and signal processing electronics, which are arranged to receive a signal from the probe. The signal processing electronics are arranged to determine the magnitude of an AC component of the signal; determine the flow velocity; and calculate, from the magnitude of the AC component and the flow velocity, the particle concentration in the flow.

It may be that the probe is a triboelectric probe. It may be that the probe is charged triboelectrically. It may be that the probe is charged by electrostatic induction.

It will be understood by the skilled person that triboelectric charging refers to the process by which a charge is induced on a first object by frictional contact with a second object. It will also be understood that electrostatic induction refers to the redistribution of electrical charge on an object by the electric field of a nearby electrical charge.

It may be that the AC component of the signal includes frequency content between 5Hz and 50Hz.

As stated above, the inventors of the present invention have discovered that the bandwidth of the AC component of the induced signal is much wider than indicated by the prior art. Evaluating the AC component across its full bandwidth can allow a more accurate measurement of the particle concentration, including in the presence of variable flow velocity. Furthermore, evaluating the full bandwidth of the signal can allow the flow velocity to be determined from an average frequency of the AC component.

It may be that the signal processing electronics are arranged to filter the signal to remove frequency components below 0.25Hz. It may be that the signal processing electronics are arranged to filter the signal to remove frequency components below 0.15Hz. It may be that the signal processing electronics are arranged to filter the signal to remove frequency components below 0.1Hz.

High-pass filtering the signal to remove frequency components below 0.1Hz, optionally below 0.15Hz, and optionally below 0.25Hz, can reduce the risk of spurious signals due to temperature-related transient voltages.

It may be that the signal processing electronics are arranged to filter the signal to remove frequency components above 80Hz. It may be that the signal processing electronics are arranged to filter the signal to remove frequency components above 100Hz. It may be that the signal processing electronics are arranged to filter the signal to remove frequency components above 150Hz.

Low-pass filtering the signal to remove frequency components above 150Hz, optionally 100Hz, and optionally 80Hz, can reduce susceptibility of a particle concentration sensor to electromagnetic interference.

It may be that the signal processing electronics are arranged to determine a Root Mean Square (RMS) value of the AC component of the signal.

It may be that the probe is arranged to project into the flow. It may be that the probe is arranged to project perpendicularly to the direction of the flow.

Arranging the probe to project into the flow can provide for a simple installation process.

It may be that the particle concentration sensor further comprises a duct through which the flow is directed and onto which probe is mounted.

Directing the flow through a duct can allow a more accurate measurement of the particle concentration.

It may be that the probe comprises a metallic core and an insulation layer and the insulation layer electrically isolates the probe from the duct.

Incorporating an insulation layer to isolate the metallic core from the duct can prevent current transmission between the duct and the metallic core.

It may be that the insulation layer covers all of the metallic core, such that the metallic core is not directly exposed to the flow.

Use of an insulation layer arranged such that the metallic core is not directly exposed to the flow can prevent current transmission between the duct and the metallic core due to accumulation of charged particles between the metallic core and the duct providing a current path around the insulation layer.

It may be that the insulation layer covers only part of the metallic core, such that the metallic core is directly exposed to the flow.

Use of an insulation layer covering only part of the metallic core, such that the metallic core is directly exposed to the flow, can reduce the risk of charge accumulation on the insulation layer creating an ignition source.

It may be that the particle concentration sensor further comprises a flow velocity measurement instrument.

Incorporating a flow velocity measurement instrument can allow for improved self-test and enhanced system resilience through redundancy.

According to the second aspect of the invention there is also provided a method of measuring particle concentration in a flow. A first step of the method comprises disposing a probe into the flow, such that the probe is charged by particles in the flow. A second step of the method comprises measuring an electric signal induced by the charging of the probe. A third step of the method comprises determining the magnitude of an AC component of the signal. A fourth step of the method comprises determining the flow velocity. A fifth step of the method comprises calculating, from the magnitude of the AC component and the flow velocity, the particle concentration in the flow.

It may be that the AC component of the signal includes frequency content between 5Hz and 50Hz.

It may be that the method further comprises the step of high-pass filtering the signal to remove frequency components below 0.25Hz. It may be that the method further comprises the step of high-pass filtering the signal to remove frequency components below 0.15Hz. It may be that the method further comprises the step of high-pass filtering the signal to remove frequency components below 0.1Hz.

It may be that the method further comprises a step of low-pass filtering the signal to remove frequency components above 80Hz. It may be that the method further comprises a step of low-pass filtering the signal to remove frequency components above 100Hz. It may be that the method further comprises a step of low-pass filtering the signal to remove frequency components above 150Hz.

It may be that the step of determining the flow velocity comprises determining an average frequency of the AC component of the signal.

Determining the flow velocity by determining an average frequency of the AC component of the signal can allow the flow velocity to be determined without the use of a separate flow velocity measurement instrument.

It may be that the average frequency is determined by counting the zero crossings of the signal.

Counting the zero crossings of the signal can provide a computationally efficient means of determining the average frequency of the signal.

It may be that the average frequency is determined by use of a separate flow velocity measurement instrument.

According to the third aspect of the invention there is provided a stack including a particle concentration sensor according to the second aspect of the invention.

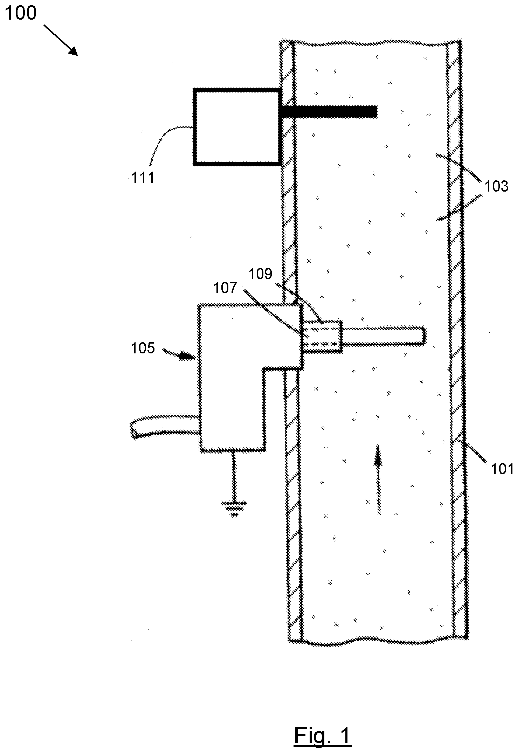

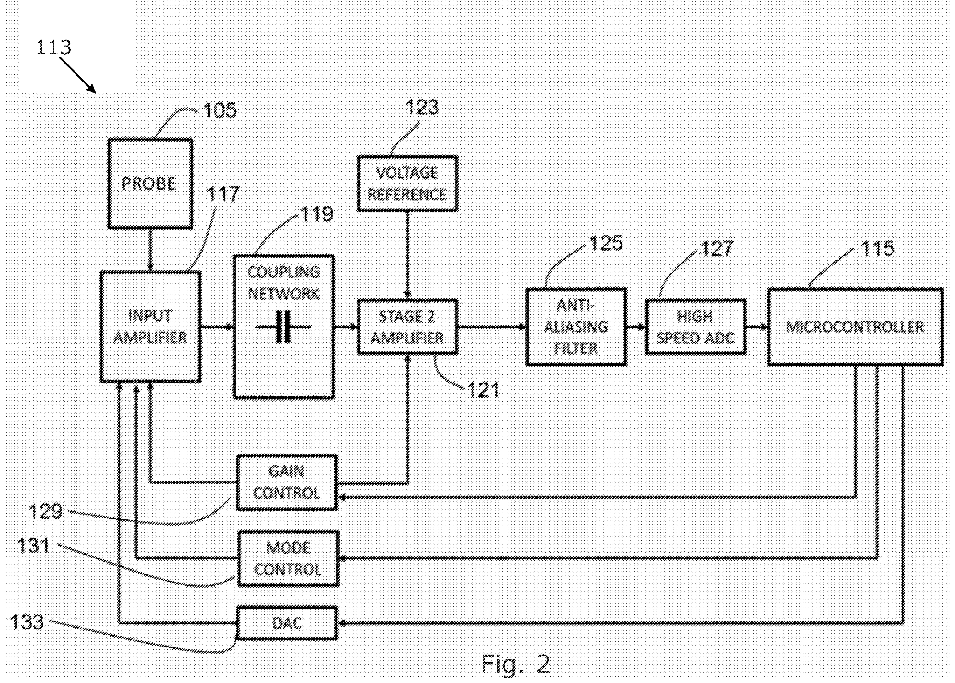

Fig. 1 shows a particle concentration sensor 100 according to a first embodiment of the invention. The particle concentration sensor comprises a duct 101, through which fluid containing solid particles 103 flows, and a probe 105 arranged to project into the flow. The probe 105 comprises a metallic core 107, insulation layer 109 between the core 107 and the duct 101 so as to electrically isolate the core 107 from the duct 101, and signal processing electronics (shown in Fig. 2). The particle concentration sensor 100 further comprises a separate flow velocity measurement instrument 111.

In operation, fluid flows along the duct 101, carrying the suspended solid particles 103 with it. As solid particles 103 are carried past the probe 105, a proportion of the solid particles 103 interact with the metallic core 107 of the probe 105. These interactions charge the metallic core 107, inducing an electric current within the metallic core 107. The induced electric current comprises a signal which is processed by the signal processing electronics. The flow velocity measurement instrument 111 measures the velocity of the flow and outputs a corresponding signal to the signal processing electronics.

The signal processing electronics 113 (Fig. 2) comprise a microcontroller 115 and a signal conditioning electronics. The detected signal from the probe 105 is received into an input amplifier 117. The input amplifier 117 performs initial filtering of the detected signal to limit the frequency content of the signal to below 1.1kHz (in this example embodiment). The input amplifier 117 also provides a programmable gain, under the control of the microcontroller 115. In this particular embodiment the input amplifier 117 may be programmed to provide gains of 100k, 10M, and 100M. The output of the input amplifier 117 is passed to a stage 2 amplifier 121 via an AC coupling network 119. The stage 2 amplifier sums the AC signal with a bias provided by reference voltage 123, level shifting the signal to facilitate later digitisation of the signal. The stage 2 amplifier 121 also provides a further programmable gain, again under the control of the microcontroller 115. In this particular embodiment the stage 2 amplifier 121 may be programmed to provide either unity gain or a gain of 5. The output of the stage 2 amplifier is passed to an anti-aliasing filter 125, the output of which is provided to a high speed analogue to digital converter (ADC) 127 which samples and digitises the signal for processing by the microcontroller 115. The microcontroller 115 performs gain control 129 of the input amplifier and stage 2 amplifier, and mode control 131 of the input amplifier 117. Mode control 131 governs switching the particle concentration sensor 100 between an operational mode, in which detected signals from the probe 105 are input to the input amplifier 117, and a self-test mode. In the self-test mode, a digital to analogue converter (DAC) 133 is controlled by the microcontroller 115 to generate a sine-wave, which is provided to the input amplifier 117 for use as a test input. By comparing the signals received at the microcontroller 115 to the known test signal generated by the DAC 133 under the control of the microcontroller 115, it is possible to evaluate the performance of the signal processing electronics 113.

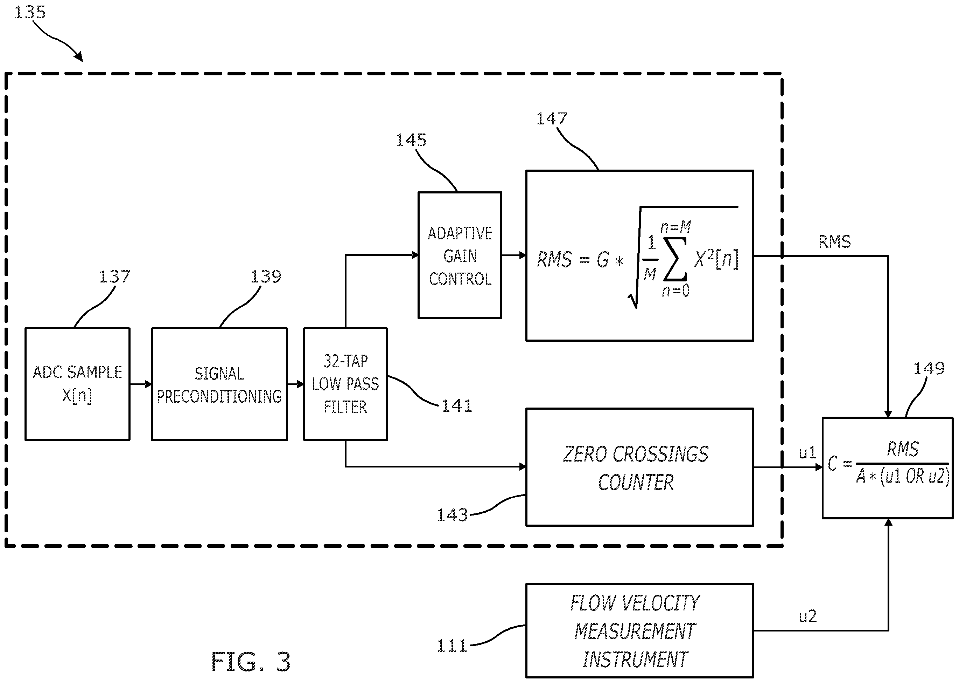

The microcontroller 115 executes signal processing software (Fig. 3) on the digitised signal received from the high speed ADC 127. The ADC samples 137 which comprise the digitised signal are preconditioned by signal preconditioning block 139, which applies any further desired scaling, filtering, or signal adjustments. The preconditioned signal is then fed into a 32-tap low pass filter 141. The low pass filter 141 removes any frequency components above 100Hz or below 0.15Hz. Removing frequency content above 100Hz reduces the risk of spurious signals derived from electromagnetic interference. Removing frequency content below 0.15Hz reduces the risk of spurious signals derived from temperature-related transient voltages. Whilst in this particular embodiment a 32-tap filter is used, in other embodiments filters with more or fewer taps may also be used. The choice of the number of taps is a compromise between the required attenuation by the low pass filter 141 and the processing power needed to implement the low pass filter 141 (a 128-tap filter is more computationally demanding than a 32-tap filter). In a first branch of the processing chain, the output of the low pass filter 141 is passed to a zero crossings counter 143, which counts the number of zero crossings over a duration of time to determine the average frequency of the signal. The average frequency of the AC signal component varies approximately linearly with respect to the flow velocity. Therefore it is possible to determine the velocity of the flow from the average frequency of the AC signal component. In a second branch of the processing chain, the Root Mean Square (RMS) of the output of low pass filter 141 is calculated over a user selectable length of time. Adaptive gain control 145 performs dynamic gain scaling during the RMS calculation 147 in order to accommodate large signal variations and to maximize dynamic range. The RMS value of the AC signal component is closely correlated with, and therefore is considered to represent an accurate measure of, the mass flow rate of the particles in the flow. An accurate measure of the particle concentration in the flow can therefore be calculated 149 by use of the formula below:

$$C = \frac{RMS}{A * V}$$

Where:

    C = particle concentration
    RMS = the RMS value of the AC signal component
    A = cross-sectional area of the duct
    V = flow velocity

It will be understood by the skilled person that this measure is proportional to the particle concentration, and that a scaling factor may be applied to give the particle concentration in absolute terms.

It will be understood by the skilled person that the probe must be physically large enough that the induced signal is of sufficient magnitude so as to be above the noise floor, and that the probe must be positioned at a laminar part of the flow, such that the flow immediately adjacent to or surrounding the probe is representative of that of substantially the whole duct. It will also be understood by the skilled person that the probe must be sufficiently large and positioned in the flow such that the detected signal is representative of the mass flow rate of particles in the flow.

In this embodiment, the flow velocity is determined by either the zero crossings counter 143 or provided by the additional flow velocity measurement instrument 111 depending on a selected mode of operation. It will be understood that some other embodiments of the invention do not include an additional flow velocity measurement instrument.

The particle concentration sensor of the first embodiment is particularly suited to use in a stack. It should be noted that a stack is a particularly harsh and challenging environment in which to operate, being very dirty, hot, and often very difficult to access.

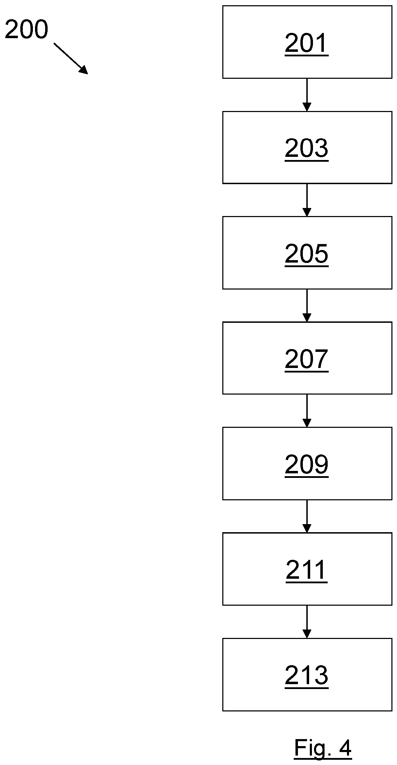

Fig. 4 shows the steps of a method 200 of measuring particle concentration in a fluid flow according to a second embodiment of the invention. A first step, represented by box 201, comprises disposing a probe into the flow, such that the probe is charged by particles in the flow. A second step, represented by box 203, comprises measuring an electric signal induced by the charging of the probe. An optional third step, represented by box 205, comprises high-pass filtering the signal to remove frequency components below 0.1Hz. An optional fourth step, represented by box 207, comprises low-pass filtering the signal to remove frequency components above 100Hz. A fifth step, represented by box 209, comprises determining the magnitude of an AC component of the signal. A sixth step, represented by box 211, comprises determining the flow velocity. A seventh step, represented by box 213, comprises calculating the particle concentration in the flow. It will be appreciated that the steps may be performed concurrently and/or in a different order from that shown in Fig. 4.

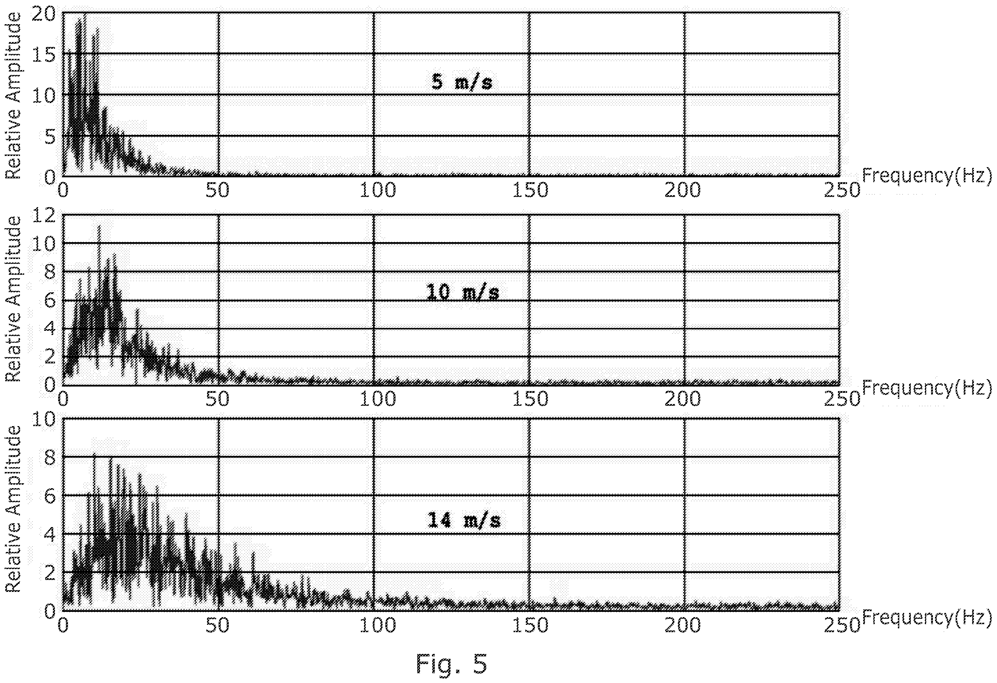

Figure 5 shows the variation in frequency content of an induced signal for a constant mass flow rate at three different flow velocities. It can be seen that an increased flow velocity corresponds to an increase in higher frequency signal content. Therefore, the average frequency of the signal can be considered a measure of the velocity of the flow.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In embodiments of the invention the probe may take the form of a conducting patch or ring embedded into the wall of the duct or any other form which exposes the probe to the flow.

In embodiments of the invention the metallic core may be covered by the insulation layer, such that the metallic core is not directly exposed to the flow.

In embodiments of the invention the flow may be directed through pipes, channels, a stack, or any other structure suitable for directing a flowing fluid.

In some embodiments of the invention an additional flow velocity measurement instrument is not included and the particle concentration sensor only operates in a mode in which velocity of the flow is determined by measuring the average frequency of the AC signal component.

In embodiments of the invention the signal processing electronics may be located within the probe. Similarly, the functions of the microcontroller may be provided by a dedicated integrated circuit (IC) or may be provided by a shared computing resource.

Embodiments of the invention may implement the functions of the signal processing electronics as software functions. Similarly, in embodiments of the invention the functions of the signal processing software may be implemented in electronic hardware.

In embodiments of the invention the microcontroller of the signal processing electronics may be comprised of one or more of a microprocessor, field programmable gate array (FPGA), complex programmable logic device (CPLD), application specific integrated circuit (ASIC), or other processing device.

In embodiments of the invention alternative methods to a zero crossings counter may be used to determine the average frequency of the signal. For example, embodiments of the invention may utilise a Fourier transform or evaluate the power spectral density of the signal. Similarly, embodiments of the invention may utilise alternative measures of the magnitude of the AC signal to an RMS value. Although preferably the RMS value of the AC signal component is used, embodiments of the invention may utilise a peak amplitude value or a running average of past peak amplitude values.

Reference should be made to the claims for determining the true scope of the present invention.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1. A method of measuring particle concentration in a fluid flow comprising the steps of:

   disposing (201) a probe (105) in the flow, such that the probe is charged by particles in the flow;
   measuring (203) an electric signal induced by the charging of the probe;
   determining (209) the magnitude of an AC component of the signal;
   determining (211) the flow velocity; and
   calculating (213), from the magnitude of the AC component and the flow velocity, the particle concentration in the flow,
   **characterised in that**:
   determining the flow velocity comprises determining an average frequency of the AC component of the signal.

2. The method of claim 1, wherein the probe (105) is a triboelectric probe, and probe is charged triboelectrically.

3. The method of claims 1 or 2, wherein the probe (105) is charged by electrostatic induction.

4. The method of any preceding claim wherein the AC component of the signal includes frequency content between 5Hz and 50Hz.

5. The method of any preceding claim further comprising the step of high-pass filtering (205) the signal to remove frequency components below 0.15Hz.

6. The method of any preceding claim further comprising the step of low-pass filtering (207) the signal to remove frequency components above 100Hz.

7. The method of claim 1 wherein the average frequency is determined by counting the zero crossings of the signal.

8. A particle concentration sensor (100) for measuring particle concentration in a fluid flow, comprising:

   a probe (105), arranged to be exposed to the flow;
   signal processing electronics, arranged to receive a signal from the probe;
   wherein:
   the signal processing electronics are arranged to determine the magnitude of an AC component of the signal; determine the flow velocity by determining an average frequency of the AC component of the signal; and calculate, from the magnitude of the AC component and the flow velocity the particle concentration in the flow.

9. The particle concentration sensor of claim 8 wherein the AC component of the signal includes frequency content between 5Hz and 50Hz.

10. The particle concentration sensor of claims 8 or 9 wherein the signal processing electronics are arranged to filter the signal to remove frequency components below 0.15Hz.

11. The particle concentration sensor of any of claims 8 to 10 wherein the signal processing electronics are arranged to filter the signal to remove frequency components above 100Hz.

12. The particle concentration sensor of any of claims 8 to 11 further comprising a duct (101) through which the flow is directed and onto which the probe (105) is mounted, wherein the probe comprises a metallic core (107) and an insulation layer (109) and wherein the insulation layer electrically isolates the probe from the duct.

13. The particle concentration sensor of claim 12 wherein the insulation layer covers the all of the metallic core, such that the metallic core is not directly exposed to the flow.

14. The particle concentration sensor of claim 12 wherein the insulation layer covers only part of the metallic core, such that the metallic core is directly exposed to the flow.

15. A stack including the particle concentration sensor of any of claims 8 to 14.

**Patentansprüche**

1. Verfahren zur Messung der Partikelkonzentration in einem Fluidstrom, umfassen die Schritte:

   Anordnen (201) einer Sonde (105) in dem Strom, so dass die Sonde durch Partikel in dem Strom aufgeladen wird;
   Messen (203) eines elektrischen Signals, das durch das Aufladen der Sonde induziert wird;
   Bestimmen (209) der Größe einer Wechselstromkomponente des Signals;
   Bestimmen (211) der Stromgeschwindigkeit; und
   Berechnen (213) der Partikelkonzentration in dem Strom aus der Größe der Wechselstromkomponente und der Stromgeschwindigkeit,
   **dadurch gekennzeichnet, dass**:
   das Bestimmen der Stromgeschwindigkeit das Bestimmen einer mittleren Frequenz der Wechselstromkomponente des Signals umfasst.

2. Verfahren nach Anspruch 1, wobei die Sonde (105) eine triboelektrische Sonde ist und die Sonde triboelektrisch aufgeladen wird.

3. Verfahren nach Anspruch 1 oder 2, wobei die Sonde (105) durch elektrostatische Induktion aufgeladen wird.

4. Verfahren nach einem vorhergehenden Anspruch, wobei die Wechselstromkomponente des Signals einen Frequenzgehalt zwischen 5 Hz und 50 Hz umfasst.

5. Verfahren nach einem vorhergehenden Anspruch, ferner umfassend den Schritt der Hochpassfilterung (205) des Signals, um Frequenzkomponenten unter 0,15 Hz zu entfernen.

6. Verfahren nach einem vorhergehenden Anspruch, ferner umfassen den Schritt der Tiefpassfilterung (207) des Signals, um Frequenzkomponenten über 100 Hz zu entfernen.

7. Verfahren nach Anspruch 1, wobei die mittlere Frequenz durch Zählen der Nulldurchgänge des Signals bestimmt wird.

8. Partikelkonzentrationssensor (100) zur Messung der Partikelkonzentration in einem Fluidstrom, umfassend:

eine Sonde (105), die so angeordnet ist, dass sie dem Strom ausgesetzt ist;
Signalverarbeitungselektronik, die so eingerichtet ist, dass sie ein Signal von der Sonde empfängt;
wobei:
die Signalverarbeitungselektronik so eingerichtet ist, dass sie die Größe einer Wechselstromkomponente des Signals bestimmt; die Stromgeschwindigkeit durch Bestimmen einer mittleren Frequenz der Wechselstromkomponente des Signals bestimmt; und aus der Größe der Wechselstromkomponente und der Stromgeschwindigkeit die Partikelkonzentration in dem Strom berechnet.

9. Partikelkonzentrationssensor nach Anspruch 8, wobei die Wechselstromkomponente des Signals einen Frequenzgehalt zwischen 5 Hz und 50 Hz umfasst.

10. Partikelkonzentrationssensor nach Anspruch 8 oder 9, wobei die Signalverarbeitungselektronik so eingerichtet ist, dass sie das Signal filtert, um Frequenzkomponenten unter 0,15 Hz zu entfernen.

11. Partikelkonzentrationssensor nach einem der Ansprüche 8 bis 10, wobei die Signalverarbeitungselektronik so eingerichtet ist, dass sie das Signal filtert, um Frequenzkomponenten über 100 Hz zu entfernen.

12. Partikelkonzentrationssensor nach einem der Ansprüche 8 bis 11, ferner umfassend einen Kanal (101), durch den der Strom geleitet wird und an dem die Sonde (105) befestigt ist, wobei die Sonde einen Metallkern (107) und eine Isolierschicht (109) umfasst, und wobei die Isolierschicht die Sonde elektrisch vom Kanal isoliert.

13. Partikelkonzentrationssensor nach Anspruch 12, wobei die Isolierschicht den gesamten Metallkern bedeckt, so dass der Metallkern nicht direkt dem Strom ausgesetzt ist.

14. Partikelkonzentrationssensor nach Anspruch 12, wobei die Isolierschicht nur einen Teil des Metallkerns bedeckt, so dass der Metallkern direkt dem Strom ausgesetzt ist.

15. Stapel, umfassend den Partikelkonzentrationssensor nach einem der Ansprüche 8 bis 14.

**Revendications**

1. Procédé de mesure de concentration de particules dans un écoulement de fluide comprenant les étapes de :

disposition (201) d'une sonde (105) dans l'écoulement, de sorte que la sonde soit chargée par des particules dans l'écoulement ;
mesure (203) d'un signal électrique induit par la charge de la sonde ;
détermination (209) de la grandeur d'une composante CA du signal ;
détermination (211) de la vitesse d'écoulement ; et
calcul (213), à partir de la grandeur de la composante CA et de la vitesse d'écoulement, de la concentration de particules dans l'écoulement, **caractérisé en ce que** :
la détermination de la vitesse d'écoulement comprend la détermination d'une fréquence moyenne de la composante CA du signal.

2. Procédé selon la revendication 1, dans lequel la sonde (105) est une sonde triboélectrique, et la sonde est chargée triboélectriquement.

3. Procédé selon les revendications 1 ou 2, dans lequel la sonde (105) est chargée par induction électrostatique.

4. Procédé selon une quelconque revendication précédente, dans lequel la composante CA du signal inclut un contenu de fréquence entre 5 Hz et 50 Hz.

5. Procédé selon une quelconque revendication précédente, comprenant en outre l'étape de filtrage passe-haut (205) du signal pour supprimer des composantes de fréquence en dessous de 0,15 Hz.

6. Procédé selon une quelconque revendication précédente, comprenant en outre l'étape de filtrage passe-bas (207) du signal pour supprimer des composantes de fréquence au-dessus de 100 Hz.

7. Procédé selon la revendication 1, dans lequel la fréquence moyenne est déterminée en décomptant les passages par zéro du signal.

8. Capteur de concentration de particules (100) pour mesurer une concentration de particules dans un écoulement de fluide, comprenant :

une sonde (105), agencée pour être exposée à l'écoulement ;
une électronique de traitement de signal, agencée pour recevoir un signal provenant de la sonde ;
dans lequel :
l'électronique de traitement de signal est agencée pour déterminer la grandeur d'une composante CA du signal ; déterminer la vitesse d'écoulement en déterminant une fréquence moyenne de la composante CA du signal ; et calculer, à partir de la grandeur de la composante CA et de la vitesse d'écoulement, la concentration de particules dans l'écoulement.

9. Capteur de concentration de particules selon la revendication 8, dans lequel la composante CA du signal inclut un contenu de fréquence entre 5 Hz et 50 Hz.

10. Capteur de concentration de particules selon les revendications 8 ou 9, dans lequel l'électronique de traitement de signal est agencée pour filtrer le signal afin de supprimer des composantes de fréquence en dessous de 0,15 Hz.

11. Capteur de concentration de particules selon l'une quelconque des revendications 8 à 10, dans lequel l'électronique de traitement de signal est agencée pour filtrer le signal afin de supprimer des composantes de fréquence au-dessus de 100 Hz.

12. Capteur de concentration de particules selon l'une quelconque des revendications 8 à 11, comprenant en outre un conduit (101) à travers lequel l'écoulement est dirigé et sur lequel la sonde (105) est montée, dans lequel la sonde comprend un noyau métallique (107) et une couche d'isolation (107) et dans lequel la couche d'isolation (109) isole électriquement la sonde du conduit.

13. Capteur de concentration de particules selon la revendication 12, dans lequel la couche d'isolation recouvre la totalité du noyau métallique, de sorte que le noyau métallique ne soit pas directement exposé à l'écoulement.

14. Capteur de concentration de particules selon la revendication 12, dans lequel la couche d'isolation ne couvre qu'une partie du noyau métallique, de sorte que le noyau métallique soit directement exposé à l'écoulement.

15. Colonne incluant le capteur de concentration de particules de l'une quelconque des revendications 8 à 14.

100

111

103

109

107

105

101

<u>Fig. 1</u>

Fig. 2

FIG. 3

200

201

203

205

207

209

211

213

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8602454 A
- WO 9905479 A1
- US 5644241 A
- US 5054325 A
- WO 9322653 A1
- WO 9423281 A1
- WO 2014106078 A2
- GB 1485750 A
- CN 104316720 A